# EUROPEAN PATENT SPECIFICATION

(11) **EP 3 317 949 B1**
(45) Date of publication and mention of the grant of the patent: **14.08.2019**
(21) Application number: 16733522.3
(22) Date of filing: 29.06.2016
(51) Int. Cl.: H02K 1/26, H02K 1/28, H02K 1/30, H02K 1/32, H02K 17/00

(54) **ROTOR FOR ELECTRIC MACHINE AND ELECTRIC MACHINE COMPRISING THE SAME**
ROTOR FÜR ELEKTRISCHE MASCHINE SOWIE ELEKTRISCHE MASCHINE DAMIT
ROTOR POUR MACHINE ÉLECTRIQUE ET MACHINE ÉLECTRIQUE LE COMPRENANT

(30) Priority: 30.06.2015 CN 201510393646
(43) Date of publication of application: 09.05.2018
(73) Proprietor: ABB Schweiz AG, 5400 Baden (CH)
(72) Inventor: MALMBERG, Jukka, 00380 Helsinki (FI); HEIKEL, Carl-Mikael, 00380 Helsinki (FI); KOIVISTO, Tero, 01620 Vantaa (FI); HALMESMÄKI, Wille, 00380 Helsinki (FI); KOLONDJOVSKI, Zlatko, 00380 Helsinki (FI)
(74) Representative: Kolster Oy Ab
(86) International application number: PCT/EP2016/065165
(87) International publication number: WO 2017/001490

(56) References cited:
- DE-A1- 1 763 591
- JP-A- 2000 092 762
- US-A1- 2013 119 819
- US-A1- 2014 225 470

## Description

### FIELD OF THE INVENTION

The invention relates to a rotor for an electric machine.

A known rotor for an induction machine comprises a rotor core having an outer portion and an inner portion located closer to the rotation axis of the rotor core than the outer portion, the outer portion being connected to the inner portion through a plurality of spokes, each one of which extends in a radial direction. The spokes are spaced apart from each other in circumferential direction such that there is an axial cooling channel between each two adjacent spokes. Said known rotor further comprises a rotor shaft connected to the rotor core by a shrink fit. Examples of known rotors for an electric machine are described in publications JP 2000092762 A, US 2014/225470 A1 and DE 1763591 A1.

One of the disadvantages associated with the above rotor is that the shrink fit between the rotor core and the rotor shaft loosens substantially when the rotor heats during use. An outer surface of an induction machine rotor heats more during operating conditions than an outer surface of a rotor of a permanent magnet machine, for example. Depending on the design, a shrink fit between a rotor core and a rotor shaft of an induction machine may be able to transfer only 30 % of torque in operating temperature compared with a situation where the rotor is cold. Increasing a tightness of a shrink fit is likely to incur curving of the rotor shaft. Therefore it is difficult to provide a practical shrink fit between the rotor core and the rotor shaft.

### BRIEF DESCRIPTION OF THE INVENTION

An object of the present invention is to provide a rotor for an electric machine and an electric machine comprising the rotor so as to alleviate the above disadvantages. The objects of the invention are achieved by a rotor and an electric machine described in the following.

The invention is based on the idea of redesigning spokes connecting an outer portion and an inner portion of a rotor core such that radial transfer of forces between the outer portion and the inner portion of the rotor core is reduced. Each of the redesigned spokes is a flexible spoke comprising a skew portion extending in a non-radial direction. The skew portions of the spokes make geometry of the rotor core more flexible thereby reducing transfer of forces in radial direction between the outer portion and the inner portion of the rotor core. The skew portions allow each spoke to deform when a surface of a rotor heats more than inner parts of the rotor.

In an embodiment a torque transfer capability of a shrink fit between a rotor core and a rotor shaft is further improved by providing an outer portion of the rotor core with a plurality of small cooling channels such that cooling of the outer portion of the rotor core is improved. The plurality of small cooling channels increase total cooling area of the cooling channels compared with fewer large cooling channels. This decreases a temperature difference between the outer portion and the inner portion of the rotor core thereby improving the tightness of the shrink fit between the rotor core and the rotor shaft in operating conditions. Further, providing an outer portion of a rotor core with a plurality of small cooling channels improves rotational symmetry of the rotor core and enables symmetrical distribution of magnetic flux even when the cooling channels are located close to rotor bars.

An advantage of the invention is that contact pressure at a shrink fit between a rotor core and a rotor shaft is less affected by heating of an outer surface of the rotor core than in the case of the prior art design with radial spokes. In a rotor according to the invention a radial outwards directed force exerted by an outer portion of a rotor core on an inner portion of the rotor core is in operating conditions smaller than in the known rotor. Therefore the shrink fit maintains its torque transfer capability in operating conditions better than the shrink fit of the known rotor with radial spokes. This means that a less tight shrink fit can be manufactured without fear of the shrink fit disengaging in operating conditions.

### BRIEF DESCRIPTION OF THE DRAWINGS

In the following the invention will be described in greater detail by means of preferred embodiments with reference to the attached drawings, in which
Figure 1 shows a rotor core according to an embodiment of the invention as seen from an axial direction of the rotor core;
Figure 2 shows an enlargement of a portion of the rotor core of Figure 1;
Figures 3 to 9 show rotor cores according to alternative embodiments of the invention;
Figure 10 shows a rotor core comprising a plurality of rotor sheets stacked in an axial direction;
Figure 11 shows a rotor comprising the rotor core of Figure 10 and a rotor shaft connected to the rotor core by a shrink fit; and
Figure 12 shows a rotor core according to an embodiment of the invention in which each spoke is connected to an outer portion of the rotor core through two outer branches, and to an inner portion of the rotor core through an inner branch.

### DETAILED DESCRIPTION OF THE INVENTION

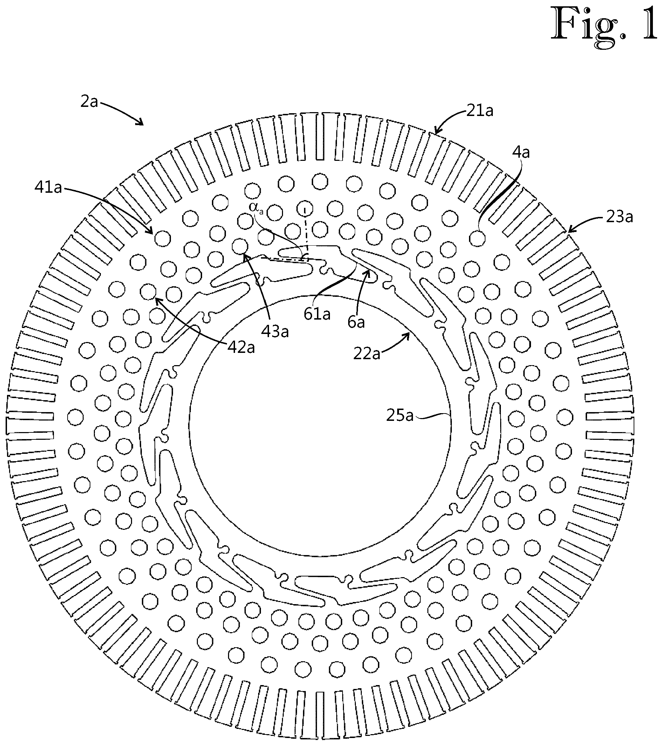

Figure 1 shows a rotor core 2a having an outer portion 21a and an inner portion 22a located closer to the rotation axis of the rotor core 2a than the outer portion 21a. The outer portion 21a is connected to the inner portion 22a through a plurality of spokes 6a. The outer portion 21a comprises a plurality of cooling channels 4a, each of which extends through the rotor core 2a in axial direction and is adapted for a flow of a cooling medium such as air. The inner portion 22a comprises a central aperture 25a adapted to receive a rotor shaft for connecting the rotor core 2a to the rotor shaft by a shrink fit.

Shrink-fitting is a well-known technique in which an interference fit is achieved by a relative size change after assembly. A shrink fit between a rotor core and a rotor shaft may be achieved by heating the rotor core before assembly and allowing it to return to the ambient temperature after assembly. Such a shrink-fitting exploits thermal expansion.

Each of the spokes 6a comprises a skew portion 61a extending in a spoke angle αₐ relative to a radial direction of the rotor core 2a. The spoke angle αₐ is measured relative to a centre line of the spoke 6a. The spoke angle αₐ is approximately 80°, depending on the location where the spoke angle is measured. The spoke angle αₐ is in its maximum at an inner end of the spoke 6a. The inner end of the spoke 6a is the end which is located adjacent the inner portion 22a of the rotor core 2a. An outer end of the spoke 6a is the end which is located adjacent the outer portion 21a of the rotor core 2a.

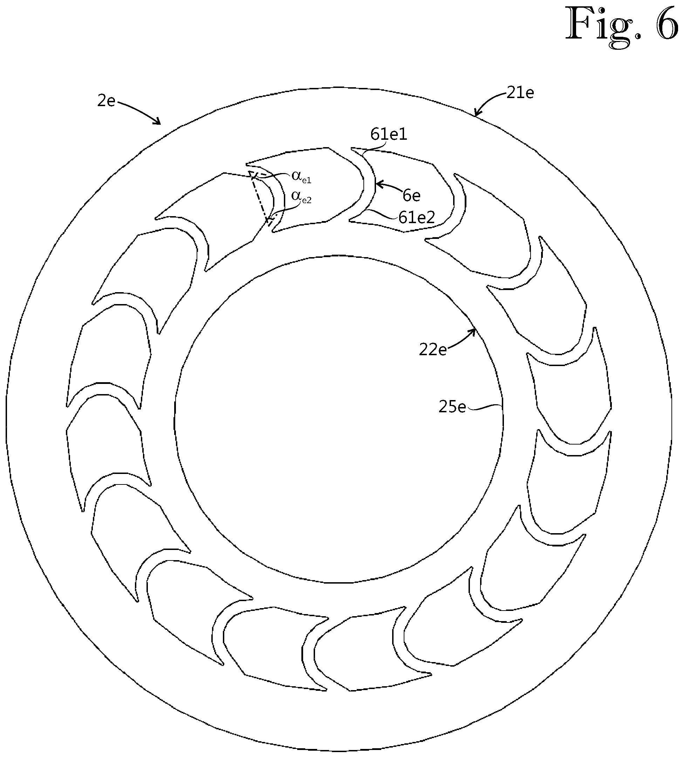

A length of a skew portion affects flexibility of a corresponding spoke. In Figure 1 a length of a skew portion 61a is roughly 0.07 times a diameter of the rotor core 2a. In alternative embodiments a length of a skew portion is in a range of 0.04 to 0.15 times a diameter of the rotor core. In some embodiments a spoke comprises more than one skew portion such that a total length of a flexible portion of the spoke is a sum of the lengths of the more than one skew portion. An example of such an embodiment is depicted in Figure 6.

During operation of an electric machine comprising the rotor core 2a the outer portion 21a of the rotor core 2a heats up and expands. However, only a small outwards directed force is exerted on the inner portion 22a of the rotor core 2a through the plurality of spokes 6a. Due to the form of the spokes 6a they have a good torque transfer capability between the outer portion 21a of the rotor core 2a and the inner portion 22a of the rotor core 2a while they transfers only little force in the radial direction. The spokes 6a provide a very flexible connection in the radial direction between the outer portion 21a of the rotor core 2a and the inner portion 22a of the rotor core 2a. Due to the flexible spokes 6a heat expansion of the outer portion 21a of the rotor core 2a affects only little a torque transfer capability of a shrink fit between the rotor core 2a and a rotor shaft.

A width of a spoke is chosen such that the spoke has desired flexibility so that thermal expansion of an outer portion of the rotor core does not affect excessively on the torque transfer capability of the shrink fit between the rotor core and the rotor shaft. A number of the spokes is chosen such that the plurality of spokes is able to transfer sufficiently torque between the outer portion of the rotor core and the inner portion of the rotor core.

The plurality of cooling channels comprises a first group 41a of cooling channels at a first distance from a rotation axis of the rotor core 2a, a second group 42a of cooling channels at a second distance from the rotation axis of the rotor core 2a, and a third group 43a of cooling channels at a third distance from the rotation axis of the rotor core 2a. Each group of cooling channels is located at a different distance from the rotation axis of the rotor core 2a than the rest of the cooling channel groups. The first group 41a of cooling channels is the outermost group, the third group 43a of cooling channels is the innermost group, and the second group 42a of cooling channels is located between the first group 41a and the third group 43a in radial direction.

A cross section of each of the plurality of cooling channels 4a is substantially circular, and a diameter of each of the plurality of cooling channels 4a is less than 0.03 times a diameter of the rotor core 2a. In alternative embodiments a diameter of each of the plurality of cooling channels is 0.06 times a diameter of the rotor core or less. Further, in alternative embodiments cross section of cooling channels may have a shape different than circular, such as an oval or a polygonal shape. Also, in some embodiments separate cooling channels are omitted, and cooling of a rotor core is realized by a flow of a cooling medium through gaps between the spokes. In embodiments which do comprise separate cooling channels, a number of cooling channels and a number of cooling channel groups can vary. Also, one group of cooling channels may have different size cooling channels than another group of cooling channels.

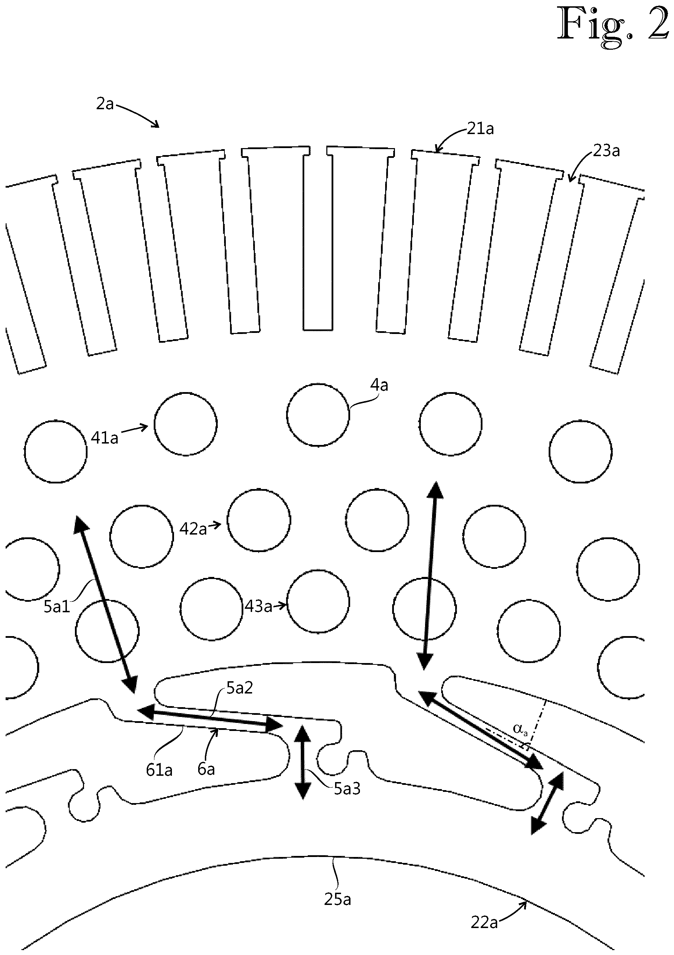

Figure 2 shows an enlargement of a portion of the rotor core 2a. Figure 2 is provided with arrows 5a1 to 5a3 depicting directions of forces induced by temperature difference between the outer portion 21a and the inner portion 22a of the rotor core 2a. Figure 2 shows that a force present in a skew portion 61a extends in a direction parallel to the skew portion 61a. The force is almost tangential and therefore it rotates the outer portion 21a slightly relative to the inner portion 22a.

The rotor core 2a comprises a plurality of rotor slots 23a on periphery thereof. Each rotor slot 23a is adapted to receive a corresponding rotor bar (not depicted).

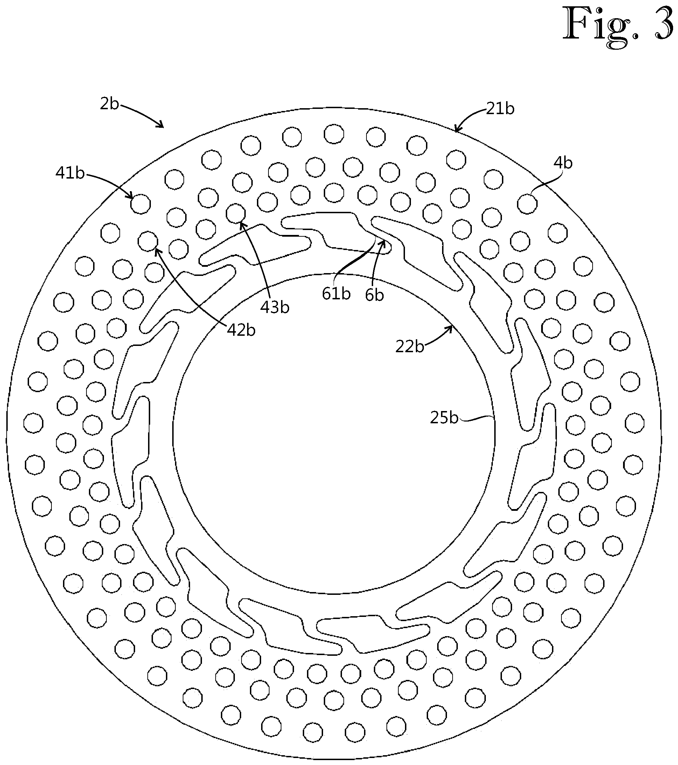

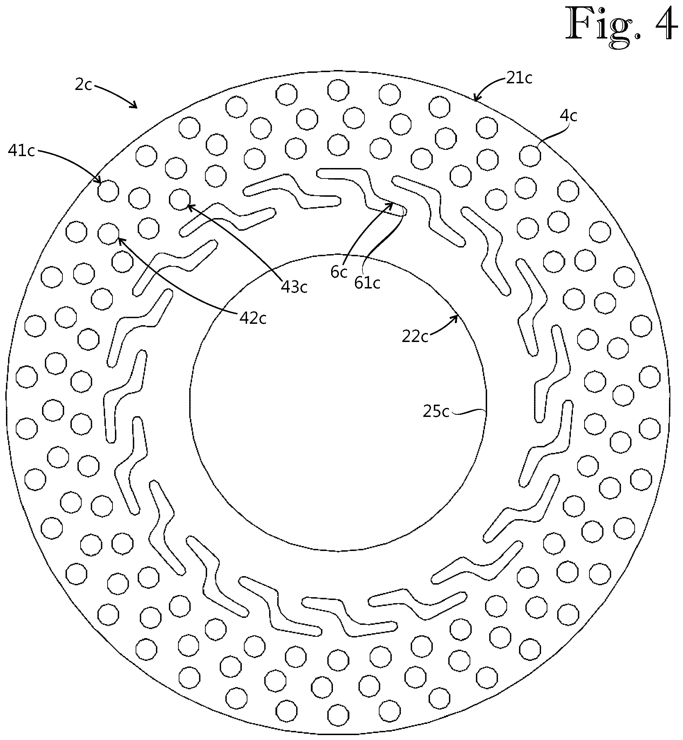

Figures 3 to 9 show rotor cores according to alternative embodiments of the invention. Reference signs of Figures 3 to 9 correspond to those of Figure 1 such that a particular feature is denoted in these figures with reference signs having a common numeric part in the beginning of reference sign. Each reference sign further comprises a letter identifying the embodiment in question. Reference signs of Figure 1 comprise letter "a", and the reference signs of Figures 3 to 9 comprise letters "b" to "h", respectively.

In Figures 3 to 9 an outer surface of each rotor core is depicted as a smooth circular surface. However, each rotor core design of Figures 3 to 9 can be provided with rotor slots similar to those depicted in Figures 1 and 2. Further, all rotor core designs of Figures 1 to 9 can be used in many types of electric machines, and not only in induction machines. An outer surface of a rotor core is shaped according to requirements of a machine type in question while the design of spokes and inner portion of the rotor core may remain the same.

Figures 1 to 9 show that a form and a size of a spoke vary in different embodiments, and so does the spoke angle α. In general case the spoke angle α is greater than 30°.

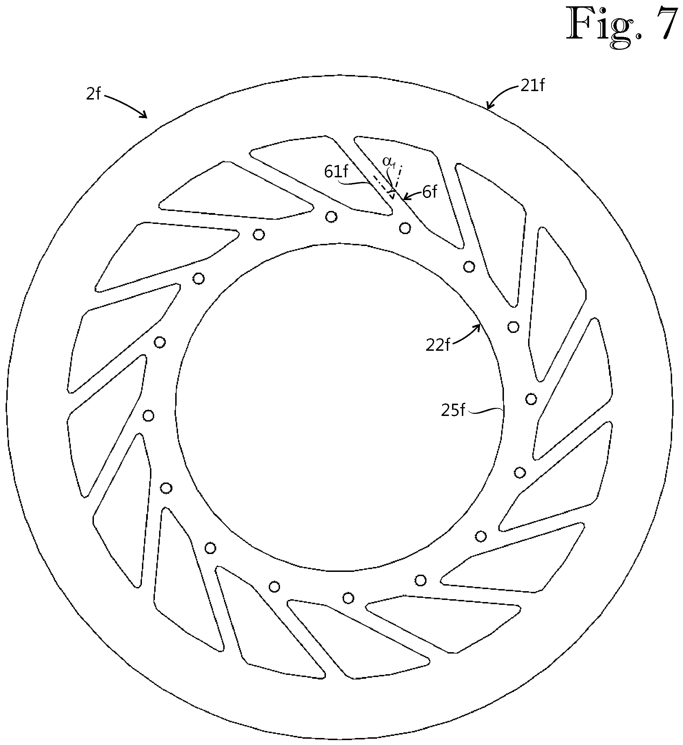

A spoke can be a straight or a curved element. Also, a spoke can have both straight and curved portions. In the embodiment of Figure 1 each skew portion 61a extends linearly. In the embodiment of Figure 7 the entire spoke 6f extends linearly. In the embodiment of Figure 6 each spoke 6e is a curvilinear member having a wide U-shaped form connecting the outer portion 21e and the inner portion 22e of the rotor core 2e. Accordingly skew portions 61e1 and 61e2 are also curvilinear members and spoke angles αₑ₁ and αₑ₂ are not constant throughout the skew portions.

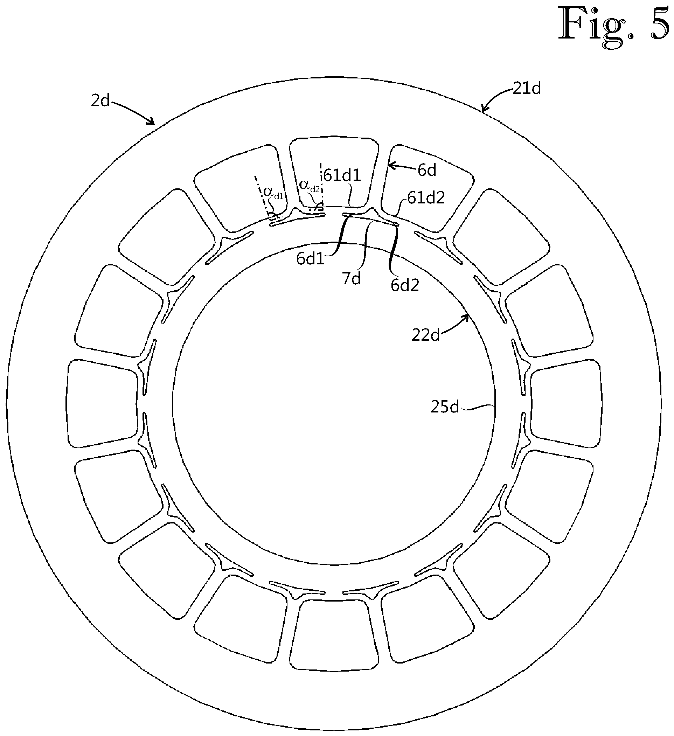

In general case each of the spokes connecting an inner portion and an outer portion of a rotor core comprises at least one skew portion extending in a spoke angle relative to a radial direction of the rotor core. In embodiment of Figure 5 each spoke 6d has two branches 6d1 and 6d2 adjacent the inner portion 22d of the rotor core 2d. The branches 6d1 and 6d2 are mirror images of each other with relation to radial direction of the rotor core 2d. The branch 6d1 comprises a skew portion 61d1 extending in a spoke angle α_{d1} relative to a radial direction of the rotor core 2d, the spoke angle α_{d1} being approximately 90° in a laterally outer portion of the branch 6d1. Herein the laterally outer portion is the portion of the branch 6d1 that is located furthest from the radial centre line of the spoke 6d. Due to the symmetry of the branches, the branch 6d2 comprises a skew portion 61d2 extending in a spoke angle α_{d2} relative to a radial direction of the rotor core 2d, the spoke angle α_{d2} being approximately 90° in a laterally outer portion of the branch 6d2.

In Figure 5, the branches 6d1 and 6d2 form a cavity 7d between the inner portion 22d of the rotor core 2d and the spoke 6d. The cavity 7d is symmetrical with relation to radial direction of the rotor core 2d. A radial dimension of the cavity 7d has its maximum at the symmetry axis of the cavity 7d, and the radial dimension of the cavity 7d decreases outwards from the symmetry axis. Herein the radial dimension refers to dimension parallel to the radial direction of the rotor core.

The cavity 7d provides flexibility between the inner portion 22d of the rotor core 2d and the spoke 6d. The cavity 7d is adapted to change its size and shape as a response to radial forces between the outer portion 21d and the inner portion 22d of the rotor core 2d. Therefore also the spoke 6d is adapted to change its shape as a response to radial forces between the outer portion 21d and the inner portion 22d of the rotor core 2d. This makes the spoke 6d a flexible member whose capability to transfer forces in radial direction is weak. Accordingly a temperature difference between the outer portion 21d and the inner portion 22d of the rotor core 2d does not substantially affect the size of the central aperture 25d of the rotor core 2d.

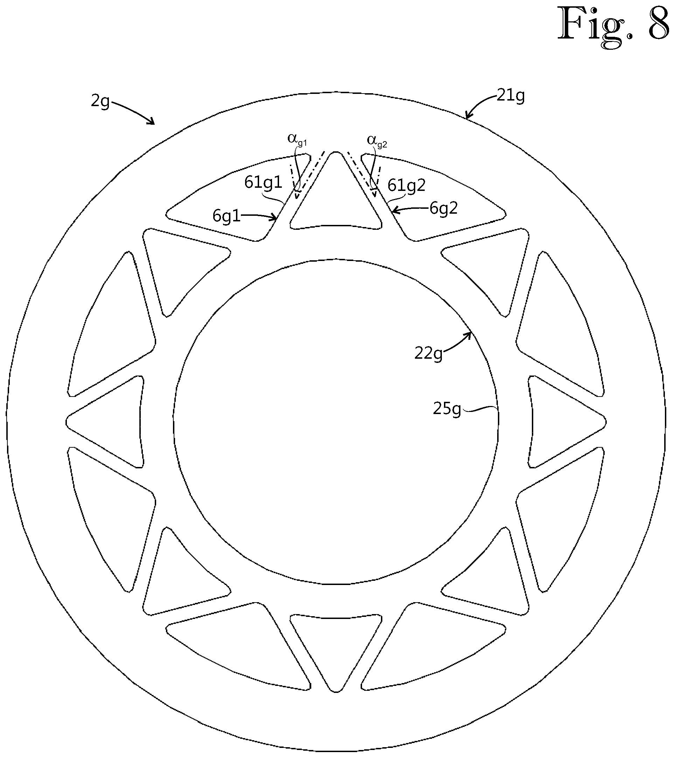

The rotor core 2g of Figure 8 has two types of spokes such that each first type spoke 6g1 extends in a spoke angle α_{g1} relative to a radial direction of the rotor core 2g, and each second type spoke 6g2 extends in a spoke angle α_{g2} relative to a radial direction of the rotor core 2g. The spoke angles α_{g1} and α_{g2} have identical absolute values but opposite signs such that the first type spokes 6g1 and the second type spokes 6g2 are mirror images of each other with relation to radial direction of the rotor core 2g.

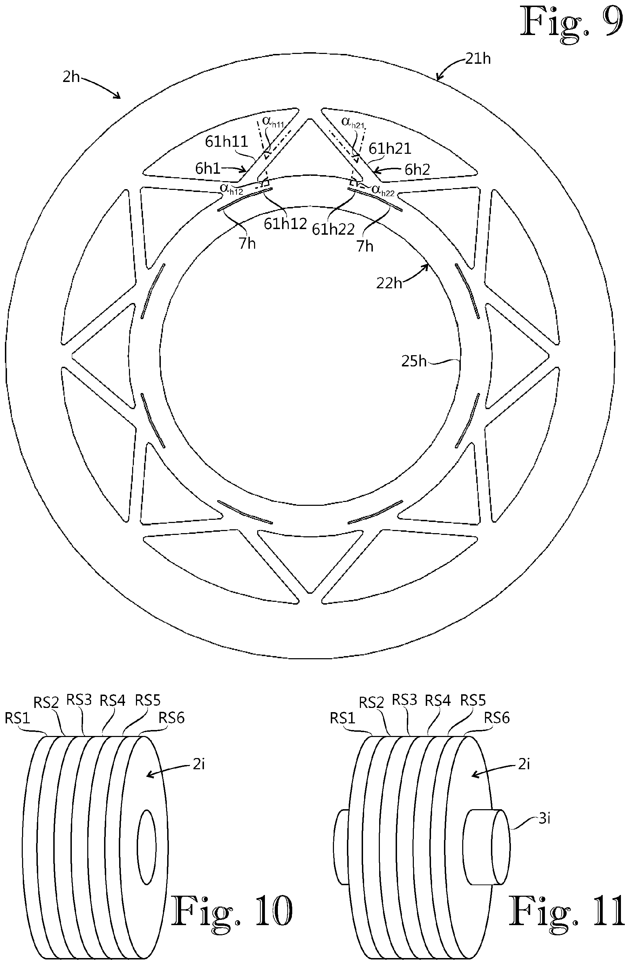

Figure 9 shows a rotor core 2h whose outer portion 21h is connected to the inner portion 22h through a plurality of spokes 6h1 and 6h2. Each spoke 6h1 comprises an outer skew portion 61h11 and an inner skew portion 61h12. The outer skew portion 61h11 is located adjacent the outer portion 21h of the rotor core 2h, and the inner skew portion 61h12 is located adjacent the inner portion 22h of the rotor core 2h.

The outer skew portion 61h11 extends in a spoke angle αₕ₁₁ relative to a radial direction of the rotor core 2h. The spoke angle αₕ₁₁ is approximately 60°. The inner skew portion 61h12 extends in a spoke angle αₕ₁₂ relative to a radial direction of the rotor core 2h. The spoke angle αₕ₁₂ is approximately 90°. The spoke angles αₕ₁₁ and αₕ₁₂ have opposite signs.

The spokes 6h1 and 6h2 are mirror images of each other with relation to radial direction of the rotor core 2h. Each spoke 6h1 is connected to an adjacent spoke 6h2 through its middle portion located between the outer skew portion 61h11 and the inner skew portion 61h12. Further, each spoke 6h1 is connected to another adjacent spoke 6h2 through its outer portion located adjacent the outer portion 21h of the rotor core 2h.

There is a cavity 7h between the inner portion 22h of the rotor core 2h and the connected inner skew portions 61h12 and 61h22. The cavity 7h is symmetrical with relation to radial direction of the rotor core 2h. The cavity 7h extends in a substantially tangential direction. Herein the tangential direction refers to the tangential direction of the rotor core. A radial dimension of the cavity 7h is substantially constant throughout the cavity 7h. The cavity 7h is adapted to change its size and shape as a response to radial forces between the outer portion 21h and the inner portion 22h of the rotor core 2h.

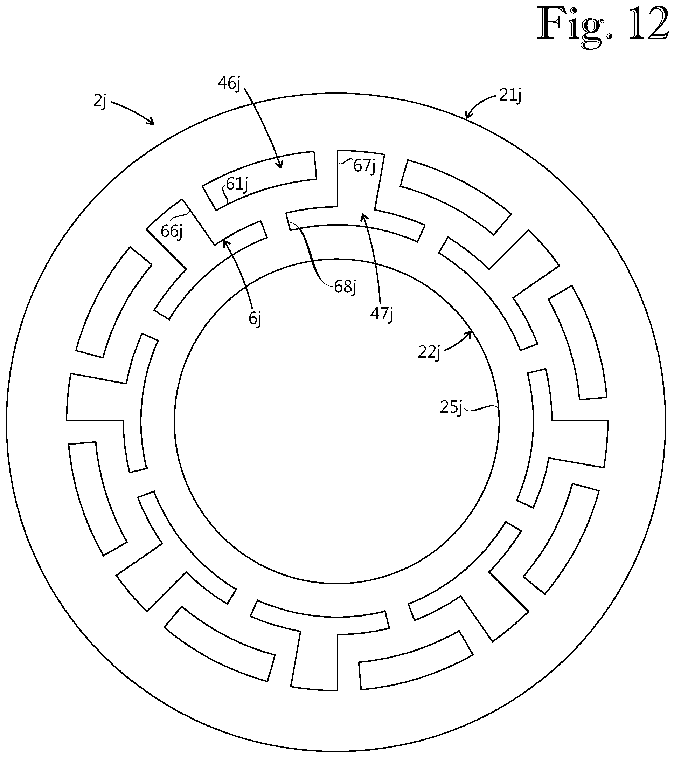

Figure 12 shows a rotor core 2j having an outer portion 21j and an inner portion 22j located closer to the rotation axis of the rotor core 2j than the outer portion 21j. The outer portion 21j is connected to the inner portion 22j through a plurality of spokes 6j which provide a very flexible connection in the radial direction between the outer portion 21j of the rotor core 2j and the inner portion 22j of the rotor core 2j. Due to the flexible spokes 6j heat expansion of the outer portion 21j of the rotor core 2j affects only little a torque transfer capability of a shrink fit between the rotor core 2j and a rotor shaft. The inner portion 22j comprises a central aperture 25j adapted to receive a rotor shaft for connecting the rotor core 2j to the rotor shaft by a shrink fit.

Each spoke 6j is connected to the outer portion 21j of the rotor core 2j through two outer branches denoted with reference signs 66j and 67j, and to the inner portion 22j of the rotor core 2j through an inner branch 68j. The outer branches 66j and 67j are located at a distance from each other in a circumferential direction of the rotor core 2j. Each spoke 6j comprises a skew portion 61j connected to the two outer branches 66j and 67j and to the inner branch 68j. The spoke 6j is symmetric with respect to a centre line of the inner branch 68j. A spoke angle of the skew portion 61j is 90°.

Each of the outer branches 66j and 67j extend substantially in radial direction. Also the inner branch 68j of the spoke 6j extends substantially in radial direction. The skew portion 61j extends substantially in tangential direction. The skew portion 61j is a curved part a centre line of which extends substantially in tangential direction throughout the skew portion 61j. In an alternative embodiment a skew portion of a spoke extends linearly between two outer branches, and a centre line of the skew portion is tangential at an inner branch of the spoke.

The skew portion 61j is located closer to the inner portion 22j of the rotor core 2j than the outer portion 21j of the rotor core 2j. This means that outer branches 66j and 67j of the spoke 6j are longer than the inner branch 68j of the spoke 6j. Further, distance between the skew portion 61j and the outer portion 21j of the rotor core 2j is greater than distance between the skew portion 61j and the inner portion 22j of the rotor core 2j.

The skew portion 61j, the two outer branches 66j and 67j, and the outer portion 21j of the rotor core 2j define an outer intermediate cooling channel 46j extending through the rotor core 2j in axial direction and being adapted for a flow of a cooling medium. The outer intermediate cooling channel 46j is located between the outer branches 66j and 67j of the spoke 6j when seen in a circumferential direction of the rotor core 2j. Adjacent spokes 6j define, together with the outer portion 21j and the inner portion 22j of the rotor core 2j, an inner intermediate cooling channel 47j extending through the rotor core 2j in axial direction and being adapted for a flow of a cooling medium.

The rotor core 2j does not comprise cooling channels located in the outer portion 21j of the rotor core 2j. However, it is possible to modify the rotor core 2j by introducing cooling channels to the outer portion 21j of the rotor core 2j. In an embodiment a rotor core is provided with spokes of Figure 12 between inner and outer portion of the rotor core, and a plurality of cooling channels of Figure 1 located in the outer portion of the rotor core.

In Figure 12 an outer surface of the rotor core 2j is depicted as a smooth circular surface. However, the rotor core of Figure 12 can be provided with rotor slots similar to those depicted in Figures 1 and 2. The rotor core design of Figure 12 can be used in many types of electric machines. An outer surface of a rotor core is shaped according to requirements of a machine type in question while the design of spokes and inner portion of the rotor core may remain the same.

Each of the rotor cores of Figures 1 to 9 and 12 may be used in an electric machine of an azimuth thruster of a ship. In an embodiment a nominal power of an electric machine comprising a rotor according to the invention is greater than or equal to 100 kW.

In an embodiment a rotor core according to the invention comprises a plurality of rotor sheets stacked in an axial direction. Any one of the rotor cores of Figures 1 to 9 and 12 may be constructed as such a rotor core.

A principle structure of a rotor core comprising a plurality of rotor sheets stacked in an axial direction is depicted in Figure 10. Figure 11 shows a rotor comprising the rotor core 2i of Figure 10 and a rotor shaft 3i connected to the rotor core 2i by a shrink fit. The rotor core 2i comprises rotor sheets RS1, RS2, RS3, RS4, RS5 and RS6 stacked in an axial direction. Each of the rotor sheets RS1 - RS6 is manufactured by a punching process from a metal plate. Each of the rotor sheets RS1 - RS6 is identical with the rest of the rotor sheets.

It will be obvious to a person skilled in the art that the inventive concept can be implemented in various ways. The invention and its embodiments are not limited to the examples described above but may vary within the scope of the claims.

## Claims

1. A rotor for an electric machine, the rotor comprising a rotor core (2j) having an outer portion (21j) and an inner portion (22j) located closer to the rotation axis of the rotor core (2j) than the outer portion (21j), the outer portion (21j) being connected to the inner portion (22j) through a plurality of spokes (6j), and the rotor core (2j) being adapted to be connected to a rotor shaft by a shrink fit, each of the spokes (6j) comprises at least one skew portion (61j) extending in a spoke angle (αₐ) relative to a radial direction of the rotor core (2j), each of the spokes (6j) is connected to the outer portion (21j) of the rotor core (2j) through two outer branches (66j, 67j), and to the inner portion (22j) of the rotor core (2j) through an inner branch (68j), the skew portion (61j) of each of the spokes (6j) is connected to the two outer branches (66j, 67j) and to the inner branch (68j), the outer branches (66j, 67j) are located at a distance from each other in a circumferential direction of the rotor core (2j), the skew portion (61j) extends substantially in tangential direction, and each outer branch (66j, 67j) and inner branch (68j) extend substantially in radial direction, each of the spokes (6j) is symmetric with respect to a centre line of the inner branch (68j), **characterized in that** the spokes (6j) are separate elements without contact with each other.

2. A rotor according to claim 1, **characterized in that** the rotor comprises a plurality of cooling channels (4a) located in the outer portion (21a) of the rotor core, each of the plurality of cooling channels (4a) extending through the rotor core (2a) in axial direction and being adapted for a flow of a cooling medium.

3. A rotor according to claim 2, **characterized in that** the plurality of cooling channels (4a) comprises a first group (41a) of cooling channels at a first distance from a rotation axis of the rotor core (2a) and a second group (42a) of cooling channels at a second distance from the rotation axis of the rotor core (2a), and a diameter of each of the plurality of cooling channels (4a) is 0.06 times a diameter of the rotor core (2a) or less.

4. A rotor according to any one of claims 1 to 3, **characterized in that** the rotor is a rotor for an induction machine.

5. A rotor according to any one of claims 1 to 3, **characterized in that** the rotor core (2i) comprises a plurality of rotor sheets (RS1, RS2, RS3, RS4, RS5, RS6) stacked in an axial direction.

6. A rotor according to claim 5, **characterized in that** the rotor comprises a rotor shaft (3i) connected to the rotor core (2i) by a shrink fit.

7. A rotor according to any one of preceding claims, **characterized in that** the skew portion (61j) is located closer to the inner portion (22j) of the rotor core (2j) than the outer portion (21j) of the rotor core (2j).

8. A rotor according to any one of preceding claims, **characterized in that** the skew portion (61j), the two outer branches (66j, 67j) and the outer portion (21j) of the rotor core (2j) define an outer intermediate cooling channel (46j) extending through the rotor core (2j) in axial direction and being adapted for a flow of a cooling medium.

9. A rotor according to any one of preceding claims, **characterized in that** adjacent spokes (6j) define, together with the outer portion (21j) and the inner portion (22j) of the rotor core (2j), an inner intermediate cooling channel (47j) extending through the rotor core (2j) in axial direction and being adapted for a flow of a cooling medium.

10. An electric machine comprising a rotor and a stator, **characterized in that** the rotor of the electric machine is a rotor according to any one of claims 1 to 9.

11. An electric machine according to claim 10, **characterized in that** a nominal power of the electric machine is greater than or equal to 100 kW.

## Patentansprüche

1. Rotor für eine elektrische Maschine, wobei der Rotor einen Rotorkern (2j) mit einem äußeren Abschnitt (21j) und einem inneren Abschnitt (22j) aufweist, der näher an der Drehachse des Rotorkerns (2j) angeordnet ist als der äußere Abschnitt (21j), wobei der äußere Abschnitt (21j) über mehrere Speichen (6j) mit dem inneren Abschnitt (22j) verbunden ist, und der Rotorkern (2j) angepasst ist, durch Schrumpfpassung mit einer Rotorwelle verbunden zu werden, wobei jede der Speichen (6j) mindestens einen schrägen Abschnitt (61j) aufweist, der sich in einem Speichenwinkel (aₐ) im Verhältnis zu einer radialen Richtung des Rotorkerns (2j) erstreckt, wobei jede der Speichen (6j) durch zwei äußere Zweige (66j, 67j) mit dem äußeren Abschnitt (21j) des Rotorkerns (2j) und durch einen inneren Zweig (68j) des Rotorkerns (2j) mit dem inneren Abschnitt (22j) des Rotorkerns (2j) verbunden ist, der schräge Abschnitt (61j) jeder der Speichen (6j) mit den zwei äußeren Zweigen (66j, 67j) und mit dem inneren Zweig (68j) verbunden ist, die äußeren Zweige (66j, 67j) in einer Umfangsrichtung des Rotorkerns (2j) voneinander beabstandet sind, der schräge Abschnitt (61j) sich im Wesentlichen in tangentialer Richtung erstreckt, und jeder äußere Zweig (66j, 67j) und innere Zweig (68j) sich im Wesentlichen in radialer Richtung erstrecken, jede der Speichen (6j) bezogen auf eine Mittellinie des inneren Zweigs (68j) symmetrisch sind, **dadurch gekennzeichnet, dass** die Speichen (6j) separate Elemente ohne Kontakt miteinander sind.

2. Rotor nach Anspruch 1, **dadurch gekennzeichnet, dass** der Rotor mehrere Kühlkanäle (4a) aufweist, die im äußeren Abschnitt (21a) des Rotorkerns angeordnet sind, wobei jeder der mehreren Kühlkanäle (4a) sich in axialer Richtung durch den Rotorkern (2a) erstreckt und für eine Strömung eines Kühlmediums ausgelegt ist.

3. Rotor nach Anspruch 2, **dadurch gekennzeichnet, dass** die mehreren Kühlkanäle (4a) eine erste Gruppe (41a) von Kühlkanälen auf einem ersten Abstand von einer Drehachse des Rotorkerns (2a) und eine zweite Gruppe (42a) von Kühlkanälen auf einem zweiten Abstand von der Drehachse des Rotorkerns (2a) umfassen, und ein Durchmesser jedes der mehreren Kühlkanäle (4a) das 0,06-Fache eines Durchmessers des Rotorkerns (2a) oder weniger beträgt.

4. Rotor nach einem der Ansprüche 1 bis 3, **dadurch gekennzeichnet, dass** der Rotor ein Rotor für eine Induktionsmaschine ist.

5. Rotor nach einem der Ansprüche 1 bis 3, **dadurch gekennzeichnet, dass** der der Rotorkern (2i) mehrere in axialer Richtung gestapelte Rotorbleche (RS1, RS2, RS3, RS4, RS5, RS6) aufweist.

6. Rotor nach Anspruch 5, **dadurch gekennzeichnet, dass** der Rotor eine Rotorwelle (3i) umfasst, die durch Schrumpfpassung mit dem Rotorkern (2i) verbunden ist.

7. Rotor nach einem der vorhergehenden Ansprüche, **dadurch gekennzeichnet, dass** der schräge Abschnitt (61j) näher am inneren Abschnitt (22j) des Rotorkerns (2j) angeordnet ist als der äußere Abschnitt (21j) des Rotorkerns (2j).

8. Rotor nach einem der vorhergehenden Ansprüche, **dadurch gekennzeichnet, dass** der schräge Abschnitt (61j), die zwei äußeren Zweige (66j, 67j) und der äußere Abschnitt (21j) des Rotorkerns (2j) einen äußeren Kühl-Zwischenkanal (46j) definieren, der sich in axialer Richtung durch den Rotorkern (2j) erstreckt und für eine Strömung eines Kühlmediums ausgelegt ist.

9. Rotor nach einem der vorhergehenden Ansprüche, **dadurch gekennzeichnet, dass** benachbarte Speichen (6j), zusammen mit dem äußeren Abschnitt (21j) und dem inneren Abschnitt (22j) des Rotorkerns (2j), einen inneren Kühl-Zwischenkanal (47j) definieren, der sich in axialer Richtung durch den Rotorkern (2j) erstreckt und für eine Strömung eines Kühlmediums ausgelegt ist.

10. Elektrische Maschine, aufweisend einen Rotor und einen Stator, **dadurch gekennzeichnet, dass** der Rotor der elektrischen Maschine ein Rotor nach einem der Ansprüche 1 bis 9 ist.

11. Elektrische Maschine nach Anspruch 10, **dadurch gekennzeichnet, dass** eine Nennleistung der elektrischen Maschine größer als oder gleich 100 kW ist.

## Revendications

1. Rotor pour une machine électrique, le rotor comprenant un noyau de rotor (2j) ayant une partie externe (21j) et une partie interne (22j) positionnée plus à proximité de l'axe de rotation du noyau de rotor (2j) que la partie interne (21j), la partie externe (21j) étant raccordée à la partie interne (22j) par le biais d'une pluralité de rayons (6j), et le noyau de rotor (2j) étant adapté pour être raccordé à un arbre de rotor par un serrage, chacun des rayons (6j) comprenant au moins une partie oblique (61j) s'étendant dans un angle de rayon (αₐ) par rapport à une direction radiale du noyau de rotor (2j), chacun des rayons (6j) est raccordé à la partie externe (21j) du noyau de rotor (2j) par le biais de deux branches externes (66j, 67j) et à la partie interne (22j) du noyau de rotor (2j) par le biais d'une branche interne (68j), la partie oblique (61j) de chacun des rayons (6j) est raccordée aux deux branches externes (66j, 67j) et à la branche interne (68j), les branches externes (66j, 67j) sont positionnées à distance l'une de l'autre dans une direction circonférentielle du noyau de rotor (2j), la partie oblique (61j) s'étend sensiblement dans la direction tangentielle, et chaque branche externe (66j, 67j) et chaque branche interne (68j) s'étendent sensiblement dans la direction radiale, chacun des rayons (6j) est symétrique par rapport à une ligne centrale de la branche interne (68j), **caractérisé en ce que** les rayons (6j) sont des éléments séparés sans contact les uns avec les autres.

2. Rotor selon la revendication 1, **caractérisé en ce que** le rotor comprend une pluralité de canaux de refroidissement (4a) positionnés dans la partie externe (21a) du noyau de rotor, chacun de la pluralité de canaux de refroidissement (4a) s'étendant à travers le noyau de rotor (2a) dans la direction axiale et étant adapté pour un écoulement d'un milieu de refroidissement.

3. Rotor selon la revendication 2, **caractérisé en ce que** la pluralité de canaux de refroidissement (4a) comprend un premier groupe (41a) de canaux de refroidissement à une première distance d'un axe de rotation du noyau de rotor (2a) et un second groupe (42a) de canaux de refroidissement à une seconde distance de l'axe de rotation du noyau de rotor (2a) et un diamètre de chacun de la pluralité de canaux de refroidissement (4a) représente 0,06 fois un diamètre du noyau de rotor (2a) ou moins.

4. Rotor selon l'une quelconque des revendications 1 à 3, **caractérisé en ce que** le rotor est un rotor pour une machine à induction.

5. Rotor selon l'une quelconque des revendications 1 à 3, **caractérisé en ce que** le noyau de rotor (2i) comprend une pluralité de feuilles de rotor (RS1, RS2, RS3, RS4, RS5, RS6) empilées dans une direction axiale.

6. Rotor selon la revendication 5, **caractérisé en ce que** le rotor comprend un arbre de rotor (3i) raccordé au noyau de rotor (2i) par un serrage.

7. Rotor selon l'une quelconque des revendications précédentes, **caractérisé en ce que** la partie oblique (61j) est positionnée plus à proximité de la partie interne (22j) du noyau de rotor (2j) que la partie externe (21j) du noyau de rotor (2j).

8. Rotor selon l'une quelconque des revendications précédentes, **caractérisé en ce que** la partie oblique (61j), les deux branches externes (66j, 67j) et la partie externe (21j) du noyau de rotor (2j) définissent un canal de refroidissement intermédiaire externe (46j) s'étendant à travers le noyau de rotor (2j) dans la direction axiale et étant adaptées pour un écoulement d'un milieu de refroidissement.

9. Rotor selon l'une quelconque des revendications précédentes, **caractérisé en ce que** les rayons (6j) adjacents définissent, conjointement avec la partie externe (21j) et la partie interne (22j) du noyau de rotor (2j), un canal de refroidissement intermédiaire interne (47j) s'étendant à travers le noyau de rotor (2j) dans la direction axiale et étant adaptés pour un écoulement d'un milieu de refroidissement.

10. Machine électrique comprenant un rotor et un stator, **caractérisée en ce que** le rotor de la machine électrique est un rotor selon l'une quelconque des revendications 1 à 9.

11. Machine électrique selon la revendication 10, **caractérisée en ce qu'**une puissance nominale de la machine électrique est supérieure ou égale à 100 kW.
